# EUROPEAN PATENT SPECIFICATION

(11) **EP 3 759 663 B1**
(45) Date of publication and mention of the grant of the patent: **15.07.2026**
(21) Application number: 19766661.3
(22) Date of filing: 01.03.2019
(51) Int. Cl.: G06Q 10/04, G06Q 10/0631, G06Q 30/06

(54) **AUTOMATED DISPATCH OPTIMIZATION**
AUTOMATISIERTE VERSANDOPTIMIERUNG
OPTIMISATION DE RÉPARTITION AUTOMATISÉE

(30) Priority: 01.03.2018 US 201862637385 P
(43) Date of publication of application: 06.01.2021
(73) Proprietor: Bringg Delivery Technologies Ltd., Tel Aviv (IL); Sion, Lior, Tel Aviv (IL)
(72) Inventor: SION, Lior, Tel Aviv (IL)
(74) Representative: IK-IP LTD
(86) International application number: PCT/US2019/020449
(87) International publication number: WO 2019/177790

(56) References cited:
- WO-A1-2017/019501
- US-A1- 2001 047 288
- US-A1- 2016 162 833
- US-A1- 2017 290 345

## Description

### TECHNICAL FIELD

Aspects and implementations of the present disclosure relate to data processing, and more specifically, to automated dispatch optimization.

### BACKGROUND

Various devices, such as smartphones, tablet devices, portable computers, etc., can incorporate multiple sensors. Such sensors can receive and/or provide inputs/outputs that reflect what is perceived by the sensor.

US 2016/162833 A1 discloses systems and methods of preparing food products.

US 2001/047288 A1 discloses an assigning technique for a scheduling system.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
FIG. 1 illustrates an example system, in accordance with an example embodiment.
FIG. 2 illustrates an example device, in accordance with an example embodiment.
FIG. 3 is a flow chart illustrating a method, in accordance with example embodiments, for automated dispatch optimization.
FIG. 4 is a block diagram illustrating components of a machine able to read instructions from a machine-readable medium and perform any of the methodologies discussed herein, according to an example embodiment.

### DETAILED DESCRIPTION

Aspects and implementations of the present disclosure are directed to automated dispatch optimization.

It can be appreciated that existing technologies enable users to initiate transactions with various establishments that are to be fulfilled in a relatively short period of time. For example, food delivery applications/services enable users to order food from restaurants for prompt/immediate delivery. While such services may be advantageous to both restaurants and customers, certain scenarios may pose particular technical challenges for restaurants and other establishments. For example, situations can arise (sometimes unexpectedly) when a significant number of orders are received in a relatively short time period. Such a "surge" in orders can pose unique challenges for a restaurant. For example, though a restaurant may often prepare and dispatch orders one-by-one as they are received (to ensure each order is prepared and delivered as quickly as possible), such an approach may be disadvantageous if followed during a "surge" scenario. For example, by dispatching each order one-by-one when many orders are arriving quickly, the first several orders are likely to be delivered satisfactorily, however may other orders may be delayed significantly (e.g., until the drivers can return from their initial deliveries).

Accordingly, described herein in various implementations are technologies that enable automated dispatch of such orders, e.g., in order to account for various circumstances, constraints, and/or requirements. For example, as described in detail herein, the described technologies can account for other orders that have been received (e.g., in a "surge" scenario), as well as other requirements/expectations (e.g., a delivery estimate/timeframe provided to the user), and adjust aspects of the dispatch of such orders. In doing so, the satisfactory delivery of such orders (e.g., in accordance with their respective timeframes) can be optimized across the body of orders (rather than only some orders being delivered satisfactorily, and others only after a substantial delay.

Accordingly, it can be appreciated that the described technologies are directed to and address specific technical challenges and longstanding deficiencies in multiple technical areas, including but not limited to sensor-based location determination, route optimization, and device control/operation. As described in detail herein, the disclosed technologies provide specific, technical solutions to the referenced technical challenges and unmet needs in the referenced technical fields and provide numerous advantages and improvements upon conventional approaches. Additionally, in various implementations one or more of the hardware elements, components, etc., (e.g., sensors, interfaces, etc.) operate to enable, improve, and/or enhance the described technologies, such as in a manner described herein.

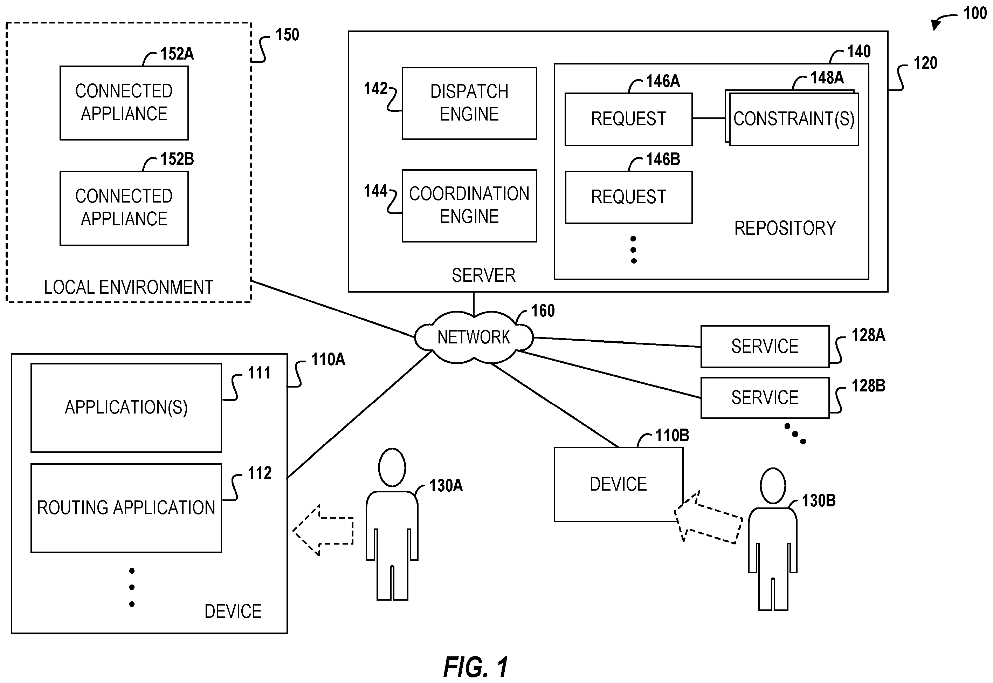

FIG. 1 depicts an illustrative system 100, in accordance with some implementations. As shown, system 100 includes device 110A and device 110B (collectively, devices 110), server 120, services 128A and 128B (collectively, services 128), and local environment 150 (including connected device(s) 152). These (and other) elements or components can be connected to one another via network 160, which can be a public network (e.g., the Internet), a private network (e.g., a local area network (LAN) or wide area network (WAN)), or a combination thereof. Additionally, in certain implementations various elements may communicate and/or otherwise interface with one another.

Each of the referenced devices 110 can be, for example, a laptop computer, a desktop computer, a terminal, a mobile device, a smartphone, a tablet computer, a smart watch, , a digital music player, a server, a wearable device, a virtual reality device, an augmented reality device, a holographic device, and the like. User 130A and user 130B (collectively, users 130) can be human users who interact with devices such as device 110A and device 110B, respectively. For example, user 130A can provide various inputs (e.g., via an input device/interface such as a keyboard, mouse, touchscreen, microphone - e.g., for voice/audio inputs, etc.) to device 110A. Device 110A can also display, project, and/or otherwise provide content to user 130A (e.g., via output components such as a screen, speaker, etc.). In certain implementations, a user may utilize multiple devices, and such devices may also be configured to operate in connection with one another (e.g., a smartphone and a smartwatch).

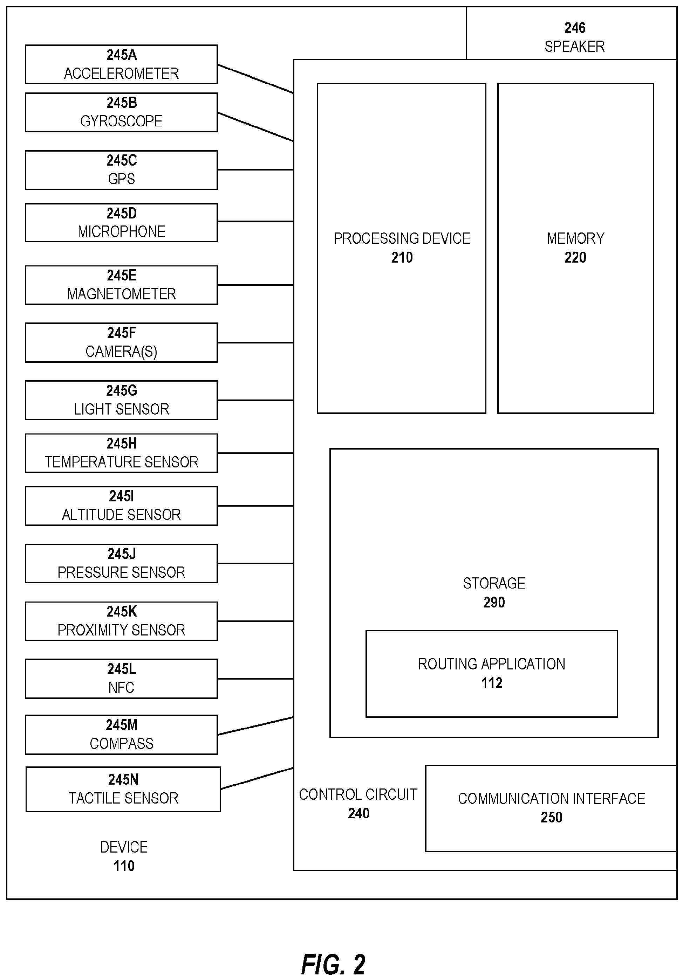

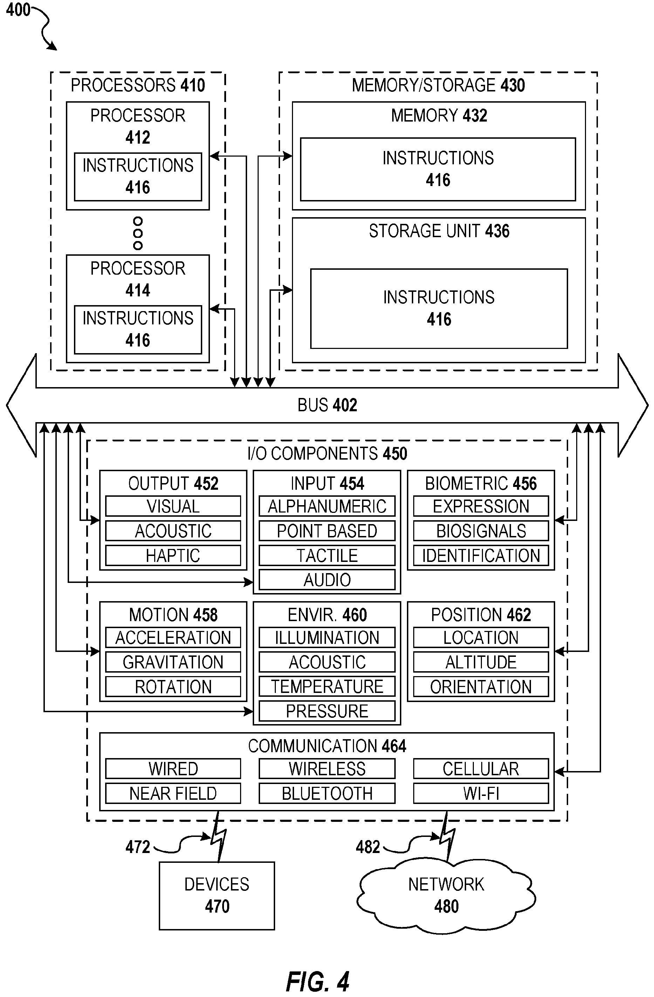

It should be understood that, in certain implementations, devices 110 can also include and/or incorporate various sensors and/or communications interfaces (including but not limited to those depicted in FIGS. 2 and 4 and/or described/referenced herein). Examples of such sensors include but are not limited to: accelerometer, gyroscope, compass, GPS, haptic sensors (e.g., touchscreen, buttons, etc.), microphone, camera, etc. Examples of such communication interfaces include but are not limited to cellular (e.g., 3G, 4G, etc.) interface(s), Bluetooth interface, WiFi interface, USB interface, NFC interface, etc. Additionally, in certain implementations devices 110 can be connected to and/or otherwise communicate with various peripheral devices.

By way of illustration, FIG. 2 depicts an example implementation of a device 110 (e.g., device 110A as shown in FIG. 1). As shown in Figure 2, device 110 can include a control circuit 240 (e.g., a motherboard) operatively connected to various hardware and/or software components that serve to enable various operations, such as those described herein. Control circuit 240 can be operatively connected to processing device 210 and memory 220. Processing device 210 serves to execute instructions for software that can be loaded into memory 220. Processing device 210 can be a number of processors, a multi-processor core, or some other type of processor, depending on the particular implementation. Further, processor 210 can be implemented using a number of heterogeneous processor systems in which a main processor is present with secondary processors on a single chip. As another illustrative example, processor 210 can be a symmetric multi-processor system containing multiple processors of the same type.

Memory 220 and/or storage 290 may be accessible by processor 210, thereby enabling processing device 210 to receive and execute instructions stored on memory 220 and/or on storage 290. Memory 220 can be, for example, a random access memory (RAM) or any other suitable volatile or non-volatile computer readable storage medium. In addition, memory 220 can be fixed or removable. Storage 290 can take various forms, depending on the particular implementation. For example, storage 290 can contain one or more components or devices. For example, storage 290 can be a hard drive, a flash memory, a rewritable optical disk, a rewritable magnetic tape, or some combination of the above. Storage 290 also can be fixed or removable.

As shown in FIG. 2, storage 290 can store routing application 112. In certain implementations, routing application 112 can be, for example, instructions, an 'app,' etc., that can be loaded into memory 220 and/or executed by processing device 210, in order to enable a user of the device to interact with and/or otherwise utilize the technologies described herein (e.g., in conjunction with/communication with server 120).

A communication interface 250 is also operatively connected to control circuit 240. Communication interface 250 can be any interface (or multiple interfaces) that enables communication between user device 102 and one or more external devices, machines, services, systems, and/or elements (including but not limited to those depicted in FIG. 1 and described herein). Communication interface 250 can include (but is not limited to) a modem, a Network Interface Card (NIC), an integrated network interface, a radio frequency transmitter/receiver (e.g., WiFi, Bluetooth, cellular, NFC), a satellite communication transmitter/receiver, an infrared port, a USB connection, or any other such interfaces for connecting device 110 to other computing devices, systems, services, and/or communication networks such as the Internet. Such connections can include a wired connection or a wireless connection (e.g. 802.11) though it should be understood that communication interface 250 can be practically any interface that enables communication to/from the control circuit 240 and/or the various components described herein.

At various points during the operation of described technologies, device 110 can communicate with one or more other devices, systems, services, servers, etc., such as those depicted in FIG. 1 and/or described herein. Such devices, systems, services, servers, etc., can transmit and/or receive data to/from the user device 110, thereby enhancing the operation of the described technologies, such as is described in detail herein. It should be understood that the referenced devices, systems, services, servers, etc., can be in direct communication with user device 110, indirect communication with user device 110, constant/ongoing communication with user device 110, periodic communication with user device 110, and/or can be communicatively coordinated with user device 110, as described herein.

Also connected to and/or in communication with control circuit 240 of user device 110 are one or more sensors 245A-245N (collectively, sensors 245). Sensors 245 can be various components, devices, and/or receivers that can be incorporated/integrated within and/or in communication with user device 110. Sensors 245 can be configured to detect one or more stimuli, phenomena, or any other such inputs, described herein. Examples of such sensors 245 include, but are not limited to: accelerometer 245A, gyroscope 245B, GPS receiver 245C, microphone 245D, magnetometer 245E, camera 245F, light sensor 245G, temperature sensor 245H, altitude sensor 245I, pressure sensor 245J, proximity sensor 245K, near-field communication (NFC) device 245L, compass 245M, and tactile sensor 245N. As described herein, device 110 can perceive/receive various inputs from sensors 245 and such inputs can be used to initiate, enable, and/or enhance various operations and/or aspects thereof, such as is described herein.

At this juncture it should be noted that while the foregoing description (e.g., with respect to sensors 245) has been directed to user device 110, various other devices, systems, servers, services, etc. (such as are depicted in FIG. 1 and/or described herein) can similarly incorporate the components, elements, and/or capabilities described with respect to device 110. It should also be understood that certain aspects and implementations of various devices, systems, servers, services, etc., such as those depicted in FIG. 1 and/or described herein, are also described in greater detail below in relation to FIG. 4.

In certain implementations, device 110 can also include one or more application(s) 111 and routing application 112. Each of application(s) 111 and routing application 112 can be programs, modules, or other executable instructions that configure/enable the device to interact with, provide content to, and/or otherwise perform operations on behalf of a user. In certain implementations, such applications can be stored in memory of device 110 (e.g. memory 430 as depicted in FIG. 4 and described below). One or more processor(s) of device 110 (e.g., processors 410 as depicted in FIG. 4 and described below) can execute such application(s). In doing so, device 110 can be configured to perform various operations, present content to user 130, etc.

Examples of application(s) 111 include but are not limited to: internet browsers, mobile apps, ecommerce applications, social media applications, personal assistant applications, navigation applications, etc. By way of further illustration, application(s) 111 can include mobile apps that enable users to initiate various operations with third-party services 128, such as navigation services, food delivery services, ride sharing services, ecommerce services, websites, platforms, etc.

Routing application 112 can be, for example, instructions, an 'app,' module, etc. executed at device 110 that generates/provides notifications, information, updates to user 130 (e.g., a driver or delivery person) regarding various requests, orders, deliveries, etc. For example, routing application can receive information from server 120 regarding new order(s) the driver can pick up (e.g., from a restaurant) in order to perform a delivery. Routing application 112 can route the user to the corresponding locations (e.g., using various navigation techniques/technologies, including but not limited to one or more of application(s) 111, such as a navigation application). For example, the driver can first be routed to the restaurant to pick up the order(s), and then (upon determining that the driver has received the orders for delivery) to the first (and then second, third, etc.) delivery on the driver's delivery route. Additionally, routing application 112 can configure device 110 to communicate with various other devices, services, etc., (e.g., server 120) in order to update such devices, etc. regarding the user's present location. In doing so, the real-time location of various drivers/devices can be accounted for in (a) assigning particular deliverie(s) to particular driver(s), (b) in providing delivery timeframe estimates to ordering users, and/or in performing various other operations, such as are described herein.

It should be noted that while application(s) 111 and 112 are depicted and/or described as operating on a device 110, this is only for the sake of clarity. However, in other implementations such elements can also be implemented on other devices/machines. For example, in lieu of executing locally at device 110, aspects of application(s) 111 and 112 can be implemented remotely (e.g., on a server device or within a cloud service or framework).

Server 120 can be a rackmount server, a router computer, a personal computer, a mobile device, a laptop computer, a tablet computer, a smartphone, a desktop computer, a media center, any combination of the above, or any other such computing device capable of implementing the various features described herein. Server 120 can include components such as dispatch engine 142, coordination engine 144, and data repository 140. In certain implementations, server 120 can also include and/or incorporate various sensors and/or communications interfaces (including but not limited to those depicted in FIG. 2 and described in relation to device(s) 110. The components can be combined together or separated in further components, according to a particular implementation. Additionally, in some implementations, various components of server 120 may run on separate machines (for example, repository 140 can be a separate device). Moreover, some operations of certain of the components are described in more detail herein.

Data repository 140 can be hosted by one or more storage devices, such as main memory, magnetic or optical storage based disks, tapes or hard drives, NAS, SAN, and so forth. In some implementations, repository 140 can be a network-attached file server, while in other implementations repository 140 can be some other type of persistent storage such as an object-oriented database, a relational database, and so forth, that may be hosted by the server 120 or one or more different machines coupled to server 120 via the network 160, while in yet other implementations repository 140 may be a database that is hosted by another entity and made accessible to server 120. In other implementations, repository 140 can be implemented as within a distributed or decentralized system/environment (e.g., using blockchain and/or other such distributed computing/storage technologies).

In certain implementations, repository 140 can store data pertaining to and/or otherwise associated with various requests, locations, and/or other information. In certain implementations, such stored information can pertain to aspects of delivery requests (e.g., restaurant orders for delivery, shipments for delivery, etc.).

For example, as shown in FIG. 1, repository 140 can include one or more requests such as request 146A, request 146B, etc. (collectively, request(s) 146). Such requests can include and/or incorporate information associated with various requests, orders, etc., that are received, e.g., from various users, services, etc. For example, in certain implementations a request can include contents of a food deliver order (e.g., menu items), a location identifier (e.g., an address to which the order is to be delivered to), a user identifier (e.g., the name and/or contact information of the user associated with the order) and/or other values, parameters, information (e.g., the time the order was placed, the time it must be delivered by, other requests or specifications, etc.).

Additionally, in certain implementations, one or more of the referenced requests 146 can be associated with one or more constraints (e.g., constraint(s) 148A, as shown). Such constraints can be, for example, various parameters, ranges, etc., within or with respect to which associated request(s)/order(s) are to be prepared, delivered, etc. Examples of such constraints include but are not limited to: time constraints pertaining to order preparation and/or packaging, time and temperature control requirements (e.g., for safety/health purposes), time constraints reflecting when an order must leave a restaurant, etc., in order to meet customer expectations, and/or other such customer expectations (which can vary, for example, with respect to a fixed delivery time, a particular timeframe, a certain time duration after an order is placed, etc.). Further aspects of the referenced constraints are described in detail herein.

In certain implementations, the referenced requests/orders 146 can originate and/or be received from various users, devices, and/or services, such as service 128A and service 128B (collectively, services 128).

Services 128 can be, for example, third-party services that enable users to purchase goods for shipment, place restaurant/food orders for delivery, and/or any other such services. Accordingly, upon receiving a request/order (e.g., for food delivery, flowers, gifts, etc.), such a service 128 can provide or transmit a request to server 120. Such a request can include, for example, contents of the order (e.g., menu items), a location identifier (e.g., an address to which the order is to be delivered to), and/or other values, parameters, information (e.g., the time the order was place, the time it must be delivered by, other requests or specifications, etc.). In certain implementations, the referenced requests/orders, information, etc., can be stored in repository 140, e.g., as shown in FIG. 1 and described herein. Accordingly, repository 140 can maintain real-time and/or historic records of orders received (e.g., orders submitted to a particular restaurant).

Additionally, in certain implementations, repository 140 can store data pertaining to various drivers/delivery personnel, orders, etc., that are handled/managed by the described technologies. For example, as noted above, device(s) 110 (which may correspond to various drivers) can routinely provide their current geographic location to server 120. Such information can be stored (e.g., in repository 140), thereby reflecting real-time and/or historic record(s) of such locations. The referenced location(s) can be further accounted for in dispatching requests/orders, coordinating aspects of the preparation of such requests/orders, and performing other operations (e.g., as described herein).

As shown in FIG. 1, server 120 can also include dispatch engine 142 and coordination engine 144. Dispatch engine 142 can be, for example, an application, module, instructions, etc., executed and/or otherwise implemented by server 120 that enables the real-time distribution of various orders to respective drivers. For example, restaurant orders received from a food ordering service 128 can be associated with/distributed to various drivers based on various criteria (e.g., availability, location, capabilities, etc., of the driver(s)).

It can be appreciated that, in certain scenarios, various fulfillment resources (e.g., drivers available to make deliveries) may be finite or limited. For example, in certain scenarios a large number of orders, requests, etc., such as restaurant delivery orders, can be received in a short period of time (referred to herein as "surge" scenarios). In such scenarios, dispatching the orders to respective drivers in the same or similar manner to which such orders may be dispatched in other (e.g., non-"surge" scenarios) can cause sub-optimal or undesirable results. For example, immediately dispatching a request/order to a driver as soon as possible after the order is received may be advantageous in scenarios in which multiple drivers are available (since subsequently received orders may be dispatched to such available driver(s)). However, when fewer drivers are available, immediately dispatching orders to certain drivers may result in some users receiving their orders in a timely fashion, while other users experiencing dramatically different (worse) service (e.g., delayed delivery, cold food, etc.).

Accordingly, as described in detail herein, in certain implementations the described technologies, including dispatch engine 142 can be configured to enable dynamic dispatching and other associated features and functionality. For example, in lieu of dispatching various received requests/orders independent of one another, the described technologies can dynamically dispatch such orders in a manner that improves and/or optimizes one or more results, e.g., across the body of orders. As describe herein, the operation and coordination between multiple devices and, operating in real-time, can enable the described technologies to automate and improve the performance of various systems and machines. Doing so can also, for example, increase overall user satisfaction (across a body of orders) in lieu of satisfying only certain customers while disappointing others.

By way of further illustration, as noted above, in certain implementations various constraints can be defined or determined with respect to a particular request/order and/or a set of requests/orders (e.g., those received within a defined timeframe). Such constraints can reflect various parameters, ranges, etc., within or with respect to which the referenced order(s) are to be prepared, delivered, etc. Examples of such constraints include but are not limited to: time constraints pertaining to order preparation and/or packaging, time and temperature control requirements (e.g., for safety/health purposes), time constraints reflecting when an order must leave a restaurant, etc., in order to meet customer expectations, and/or other such customer expectations (which can vary, for example, with respect to a fixed delivery time, a particular timeframe, a certain time duration after an order is placed, etc.).

In certain implementations, the referenced constraints may be defined or determined by certain users (e.g., an administrator or authorized user associated with a restaurant, as described herein). Additionally, in certain implementations the referenced constraints can be defined, determined, and/or computed (e.g., in an automated manner) based on other constraints and/or other information provided to and/or accessed by the system (e.g., data included in a received request/order, inputs originating from one or more sensors of a device, etc.). By way of example, the referenced constraints can be defined as a predetermined time interval (e.g., an amount of time from receipt of the order that the order is to be prepared, dispatched for delivery, and/or delivered).

In certain implementations, the referenced constraints can also reflect a time derived or determined based on another constraint. By way of example, based on a constraint reflecting that an order must be out for delivery no later than 20 minutes after it has been received, additional constraints can be computed reflecting a time by which the preparation of various foods must begin (e.g., pizza, which takes six minutes to prepare, must begin no later than 14 minutes after the order is received, while French fries, which take two minutes to prepare, must begin no later than 18 minutes after the order is received, in order to meet the referenced 20 minute delivery constraint).

Additionally, in certain implementations the referenced constraints can be computed based on a defined or determined customer expectation or guarantee. For example, orders that are prepared can wait a certain period of time before being dispatched for delivery, though such orders must be dispatched no later than 10 minutes before the delivery time/estimate provided to the customer. Accordingly, in such a scenario, corresponding constraint(s) can be defined to reflect the referenced order dispatch requirement(s) (e.g., as computed based on the delivery time/estimate provided to the user).

Using the referenced constraint(s), the described technologies can further define or determine a window or time interval within which prepared request(s)/order(s) can be dispatched for delivery. For example, in a scenario in which a first order has been prepared and is ready for dispatch, the actual dispatch of such an order can be adjusted (e.g., extended by several minutes) to enable additional orders (e.g., those that may be ready for dispatch shortly) to be dispatched with the first order (e.g., to the same driver). In doing so, "surge" scenarios (when a larger number of orders are received in a short time) can be more effectively and efficiently managed.

For example, by extending the dispatch of the first request/order by two or three minutes, a second request/order may be completed and ready for dispatch (together with the first order) to the same driver. As a result, both the first order and the second order are more likely to be received by their respective recipients in a satisfactory manner (perhaps only delaying delivery of the first order by two or three minutes). In contrast, in a scenario in which the described technologies are not implemented (and the first order is dispatched for delivery as soon as it is prepared), the recipient of the second order may be subjected to an unsatisfactory experience during a "surge" scenario (e.g., receiving their order 30 minutes later than the original estimate), on account of having to wait for another driver to become available.

In certain implementations, such a window/interval can be dynamically adjusted to further account for subsequently received requests/orders and/or other circumstances. For example, upon receiving an initial wave or batch of orders (creating a "surge" scenario in which a delivery workforce may be unable to perform all the corresponding deliveries if such deliveries are prepared immediately and dispatched individually), a first window/interval can be defined. By way of illustration, such a first window can be a five-minute interval, during which prepared orders (which may otherwise be ready for delivery) can be held, allowing additional time for the completion of other orders (which may then be dispatched together). In such a scenario, if a subsequent wave or batch of orders is received (further exacerbating the "surge" scenario and risking that additional orders may not be deliverable within a reasonable timeframe), the referenced window/interval can be further adjusted. For example, by adjusting the referenced window from five to seven minutes, the described technologies may further increase the number of orders that are satisfactorily delivered.

In certain implementations, the described technologies can account for various additional factors in relation to determining, computing, and/or otherwise utilizing the referenced constraints, windows, intervals, etc. Examples of such factors include but are not limited to: driver preparation time (e.g., the amount of time a driver may need to prepare to leave the premises of a restaurant after being assigned an order) and kitchen preparation time.

In addition to adjusting various aspects of the dispatch of the referenced requests/orders (e.g., once such orders are prepared), the described technologies can further coordinate, adjust, and/or improve/optimize various aspects of the preparation of the referenced order(s). Such adjustments can enable an establishment (e.g., a restaurant) to prepare, package, etc., a product (e.g., food) in a manner best suited for the circumstances under which such a product is likely to be delivered. In certain implementations, the referenced adjustments can be initiated and/or managed by coordination engine 144 (e.g., an application/module that configures various devices and/or otherwise performs various operations as described herein).

By way of illustration, as shown in FIG. 1, the described technologies (e.g., system 100) can include or otherwise incorporate various connected appliances or device(s) 152A, 153B, etc. (collectively, connected appliance(s) 152). In certain implementations, such connected appliance(s) can be arranged within a local environment 150 (e.g., the premises of a restaurant).

For example, as shown in FIG. 1, connected appliance 152A can be a 'connected' oven (e.g., a pizza oven that incorporates a network connection capable of communication, interaction, and/or control, e.g., via various IoT ('Internet of Things') communication protocols). Connected appliance 152B can be, for example, a connected frying or cooking device (e.g., an appliance that prepares French fries in an automated fashion and is capable of communication/control via IoT protocols, etc.). In certain implementations, such connected appliance(s) 152 can communicated directly with one another and/or with other devices, and/or connect to an access point, hub, etc. within local environment 150, which can further connect to network 160, as shown.

Accordingly, in various scenarios described and illustrated herein, the described technologies can be further enhanced through the utilization of inputs, functionalities, etc., of the referenced connected appliances. For example, as described herein, in certain implementations the described technologies can be further configured to adjust various aspects of the referenced 'connected' appliances, e.g., in order to ensure that the food is prepared in a manner best suited for the manner in which it will be delivered. By way of further example, elements and/or functionalities of the referenced connected devices can be used to determine the status of various requests/orders (e.g., based on embedded or connected sensors, e.g., optical sensors, temperature sensors, etc., which can be used to determine how much time may be needed before an order is complete). Doing so can, further improve, optimize, and/or otherwise enhance the described operations and technologies, as described herein.

By way of further illustration, in one scenario, when a request/order is received, it may be possible (e.g., in a normal, non-"surge" scenario) to initiate preparation of the order as soon as possible (such that the order can be dispatched and delivered as quickly as possible). However, in a "surge" scenario (in which many orders are received in a short time), it may be advantageous to temporarily delay preparation of an order (after it is initially received).

For example, in a scenario in which an item (e.g., a pizza) can be prepared in 15 minutes, however, due to the referenced "surge" scenario, the dispatch of such a request/order may be delayed (e.g., by 5 minutes, to allow for other orders to be grouped together for delivery), the described technologies can adjust the preparation of such an item. For example, though the order has been received, it may be 'held' for a corresponding 5 minutes before being provided to the kitchen for preparation (thereby ensuring that the pizza is as fresh as possible when being dispatched). By way of further example, a connected appliance (e.g., an automated cooking device or oven) can be configured or otherwise instructed to begin preparation of such an item in accordance with the referenced adjustment.

In another example, the described technologies (e.g., coordination engine 144) can adjust aspects of the preparation of various items, e.g., to improve or optimize such operations/preparation in view of the circumstances under which the item may be delivered. That is, it can be appreciated that it may be advantageous for a restaurant to prepare/package food in a manner likely to be most appealing to a customer when the order is delivered. Additionally, certain food items may be best prepared or packaged one way when the item is received within one time interval (e.g., 30 minutes or less from the time it was prepared), and best prepared/packaged another way when received within another time interval (e.g., more than 30 minutes from preparation). Accordingly, upon determining (e.g., with respect to a request/order received during a "surge" scenario) that the delivery of an order/item is likely to occur within a defined interval (e.g., 40 minutes from order receipt), aspects of the preparation of such an item/order can be adjusted accordingly.

By way of illustration, it may be preferable to cook or prepare certain food items a bit more (or a bit less) if they are to be consumed a longer time after preparation (e.g., over 30 minutes). Accordingly, the described technologies (e.g., server 120, coordination engine 144, connected appliance(s) 152, etc.) can utilize the described constraints, determinations, etc., to determine the optimal preparation for a particular item. Based on such a determination the described technologies can further adjust operation of a corresponding connected appliance (e.g., oven, etc.) to prepare the item in such a manner.

By way of further example, certain items or orders may be best packaged or assembled in different ways depending on when the item is to be consumed (e.g., applying dressing to a salad vs. packaging it separately). Accordingly, based on the referenced determinations, the described technologies can further coordinate such aspects of order preparation. In doing so, the described technologies can utilize the referenced determinations to improve, optimize, or otherwise adjust operations of the referenced connected appliance(s). As a result, the referenced items/order can be prepared in a manner best suited for the circumstances under which they are likely to be delivered (e.g., by accounting for delivery during a "surge" scenario in which such an item may be delivered after a longer timer interval than when delivered in non-"surge" scenario).

It should be understood that though FIG. 1 depicts server 120, and devices 110, appliance(s) 152, etc. as being discrete components, in various implementations any number of such components (and/or elements/functions thereof) can be combined, such as within a single component/system.

It should also be noted that, in certain implementations, the described technologies can provide valuable insights and/or updates to various participants. For example, the described technologies (e.g., device 110, application(s) 111 and/or 112, dispatch engine 142, server 120, etc.) can provide drivers, delivery personnel, etc. with an interface through which information or updates regarding received requests/orders (and their status) can be accessed, viewed, and/or received. Through such an interface, a driver can view, for example, the number of orders that have been received, stage(s) of preparation of such orders (e.g., the number of orders likely to be ready for dispatch within the next 10 minutes), delivery status of certain orders (e.g., the number of orders that have not been assigned to a driver), etc. Providing access to such information can enable drivers to better plan their activities, and can promote trust and reliability through transparency.

By way of further example, the described technologies can provide transparency to drivers with respect to certain types of requests/orders such as "rogue orders." As described herein, such "rogue orders" can be, for example, orders that have been received but may not yet be dispatched (e.g., for delivery, preparation, etc.) due to various errors or inconsistencies (e.g., addresses that cannot be confirmed, orders that cannot be delivered on time, etc.). In certain implementations, such rogue orders may be manually corrected and/or dispatched automatically to certain drivers under certain circumstances. For example, such rogue orders can be dispatched in an ever/fair manner to available drivers (e.g., by assigning them to the least-loaded driver, based on a first-in-first-out (FIFO) approach, etc.).

In certain implementations, the described technologies can also provide a single or unified user interface/experience, through which a user (e.g., a restaurant, merchant, etc., that is dispatching orders) can initiate, track, etc., deliveries, including those that are being completed by various drivers, delivery personnel, etc.

It should also be noted that while various aspects of the described technologies are described with respect to restaurant/retail deliveries, food preparation, etc., such descriptions are intended to be illustrative and provided by way of example. Accordingly, it should be understood that the described technologies can also be effectively and advantageously applied in many other contexts, settings, and/or industries. For example, the described technologies can also be implemented in settings/contexts pertaining to taxi/ride-sharing services, operation of UAVs (unmanned aerial vehicles or 'drones'), and/or any other such services, such as services that leverage the location and/or capabilities of various participants/candidates and route operations, tasks, jobs, etc., to such devices, users, etc., in a manner that enables such tasks, etc., to be efficiently completed (and/or completed in an effective manner, e.g., fastest, most cost effectively, etc.).

Additionally, as described herein, the described technologies can provide a user (e.g., a customer that initiates a request/order requesting food delivery from a restaurant) a single, unified interface that can reflect activity pertaining to multiple orders being fulfilled by different delivery services.

As used herein, the term "configured" encompasses its plain and ordinary meaning. In one example, a machine is configured to carry out a method by having software code for that method stored in a memory that is accessible to the processor(s) of the machine. The processor(s) access the memory to implement the method. In another example, the instructions for carrying out the method are hard-wired into the processor(s). In yet another example, a portion of the instructions are hard-wired, and a portion of the instructions are stored as software code in the memory.

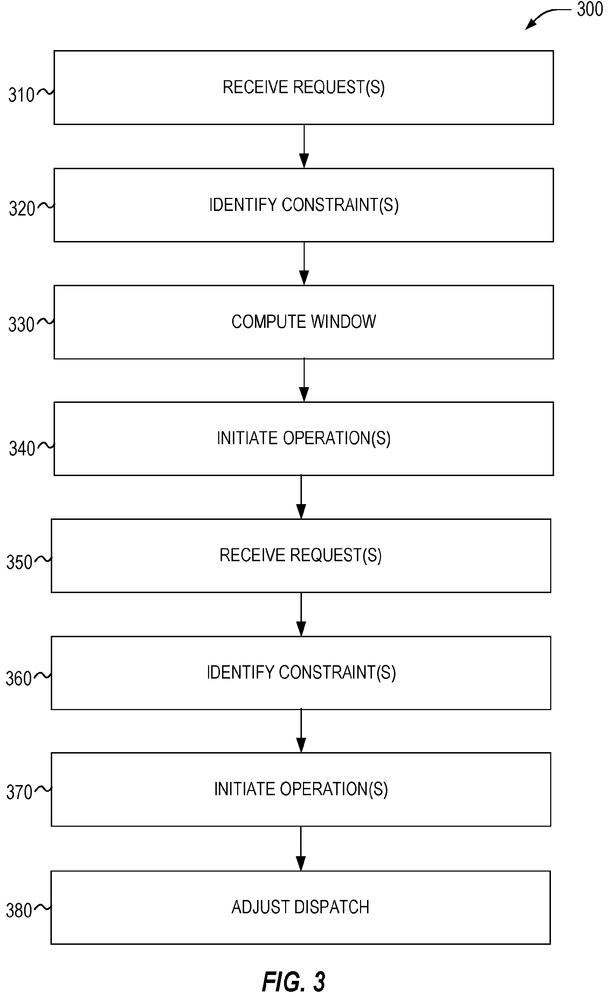

FIG. 3 is a flow chart illustrating a method 300, according to an example embodiment, for automated dispatch optimization. The method is performed by processing logic that can comprise hardware (circuitry, dedicated logic, etc.), software (such as is run on a computing device such as those described herein), or a combination of both. In one implementation, the method 300 is performed by one or more elements depicted and/or described in relation to FIG. 1 (including but not limited to server 120, dispatch engine 142, coordination engine 144, appliance(s) 152, and/or device(s) 110), while in some other implementations, the one or more blocks of FIG. 4 can be performed by another machine or machines.

For simplicity of explanation, methods are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term article of manufacture, as used herein, is intended to encompass a computer program accessible from any computer-readable device or storage media.

At operation 310, one or more first request(s)/order(s) is/are received (e.g., as described herein). In certain implementations, the referenced orders may be received within a defined period of time, thereby creating a "surge" scenario that may strain various operational aspects of an establishment (e.g., preparation and/or delivery capabilities), as described herein.

At operation 320, one or more constraints are identified. In certain implementations, such constraints can be associated with the first request (e.g., as received at 310). Moreover, in certain implementations the referenced constraints can be computed based on the referenced request. As described in detail herein, in certain implementations, such constraints can be parameters, requirements, etc., associated with the referenced request/order, etc. For example, as described herein, in certain implementations various constraints can be defined or determined with respect to a particular request/order and/or a set of requests/orders (e.g., those received within a defined timeframe). Such constraints can reflect various parameters, ranges, etc., within or with respect to which the referenced order(s) are to be prepared, delivered, etc. Examples of such constraints include but are not limited to: time constraints pertaining to order preparation and/or packaging, time and temperature control requirements (e.g., for safety/health purposes), time constraints reflecting when an order must leave a restaurant, etc., in order to meet customer expectations, and/or other such customer expectations (which can vary, for example, with respect to a fixed delivery time, a particular timeframe, a certain time duration after an order is placed, etc.)..

Moreover, in certain implementations one or more second constraint(s) can be computed based on one or more first constraint(s). For example, in certain implementations the referenced constraints can be defined, determined, and/or computed (e.g., in an automated manner) based on other constraints and/or other information provided to and/or accessed by the system (e.g., data included in a received request/order, inputs originating from one or more sensors of a device, etc.). By way of example, the referenced constraints can be defined as a predetermined time interval (e.g., an amount of time from receipt of the order that the order is to be prepared, dispatched for delivery, and/or delivered).

In certain implementations, the referenced constraints can also reflect a time derived or determined based on another constraint. By way of example, based on a constraint reflecting that an order must be out for delivery no later than 20 minutes after it has been received, additional constraints can be computed reflecting a time by which the preparation of various foods must begin (e.g., pizza, which takes six minutes to prepare, must begin no later than 14 minutes after the order is received, while French fries, which take two minutes to prepare, must begin no later than 18 minutes after the order is received, in order to meet the referenced 20 minute delivery constraint).

Additionally, in certain implementations the referenced constraints can be computed based on a defined or determined customer expectation or guarantee. For example, orders that are prepared can wait a certain period of time before being dispatched for delivery, though such orders must be dispatched no later than 10 minutes before the delivery time/estimate provided to the customer. Accordingly, in such a scenario, corresponding constraint(s) can be defined to reflect the referenced order dispatch requirement(s) (e.g., as computed based on the delivery time/estimate provided to the user).

At operation 330, a dispatch window is computed. In certain implementations, such a dispatch window can be computed based on the one or more constraints (e.g., as identified at 320) and/or based on/with respect to the first request (e.g., as received at 310), as described herein. Such a dispatch window can reflect, for example, a time interval with respect to which dispatch of the request/order (e.g., the assignment of an order to a driver and/or the notification of such assignment to the driver) can be shifted, adjusted, etc. Such an adjustment window can, for example, enable various other orders to be received, prepared, and/or completed. By way of illustration, such a dispatch window can be a five-minute interval, during which prepared orders (which may otherwise be ready for delivery) can be held, allowing additional time for the completion of other orders (which may then be dispatched together). In doing so, a driver may be able to take several orders at a time, thereby increasing efficiency and improving the performance of the described technologies.

At operation 340, a first operation is initiated. In certain implementations, such an operation can be initiated with respect to the first request. For example, as described herein, one or more commands can be generated and/or provided to a connected appliance 152, e.g., to initiate preparation of one or more items associated with the referenced request.

At operation 350, one or more second request(s)/order(s) is/are received. As described herein, in certain implementations such additional orders may create a "surge" scenario that may strain various operational aspects of an establishment (e.g., preparation and/or delivery capabilities), as described herein.

Moreover, in certain implementations one or more inputs originating from a sensor associated with the second request can be received. For example, location coordinates originating from a location sensor (e.g., GPS) of a device associated with the referenced request can be received.

At operation 360, one or more constraints associated with the second request can be identified. As described in detail herein (e.g., at 320), in certain implementations, such constraints can be parameters, requirements, etc., associated with the referenced request/order, etc. (e.g., the request received at 350).

At operation 370, one or more operation(s) are initiated. In certain implementations, such operation(s) can be initiated with respect to the second request (e.g., as received at 350). For example, as described herein, one or more commands can be generated and/or provided to a connected appliance 152, e.g., to initiate preparation of one or more items associated with the referenced request. Moreover, in certain implementations such operation(s) can be initiated based on the dispatch window computed with respect to the first request, as described herein.

At operation 380, a dispatch of the first request(s) can be adjusted. In certain implementations, such dispatch can be adjusted within/in accordance with the dispatch window (e.g., the window computed at 330). Moreover, in certain implementations such dispatch can be adjusted based on the second request (e.g. as received at 350). For example, dispatch of an order that may be ready for dispatch now can be delayed for several minutes to allow for other orders to be received, prepared, and/or completed, as described in detail herein.

Moreover, in certain implementations a first operation with respect to the first request can be adjusted based on the second request. For example, as described herein, based on the second request, one or more commands can be generated and/or provided to a connected appliance 152, e.g., to adjust one or more aspects of the preparation of one or more items associated with the first request. In doing so, an adjustment of an operation of a connected appliance with respect to the first request can be initiated based on the second request, as described herein.

Additionally, in certain implementations a first operation with respect to the first request can be adjusted based on one or more constraints associated with the second request, e.g., as described herein.

Moreover, in certain implementations a dispatch of the first request can be adjusted based on receipt of the second request and one or more other requests, e.g., in a "surge" scenario, as described in detail herein.

Additionally, in certain implementations a dispatch of the first request can be adjusted based on receipt of the second request and an availability of one or more fulfillment resources, as described herein.

In certain implementations, a dispatch of the first request can be adjusted based on receipt of the second request and a determined location of one or more fulfillment resources, as described in detail herein.

Moreover, in certain implementations a dispatch of the first request and the second request can be adjusted, as described herein.

Additionally, in certain implementations the dispatch window can be adjusted, e.g., based on the second request, as described herein.

It should also be noted that while the technologies described herein are illustrated primarily with respect to the delivery of food, items, services, etc., the described technologies can also be implemented in any number of additional or alternative settings or contexts and towards any number of additional objectives.

Certain implementations are described herein as including logic or a number of components, modules, or mechanisms. Modules can constitute either software modules (e.g., code embodied on a machine-readable medium) or hardware modules. A "hardware module" is a tangible unit capable of performing certain operations and can be configured or arranged in a certain physical manner. In various example implementations, one or more computer systems (e.g., a standalone computer system, a client computer system, or a server computer system) or one or more hardware modules of a computer system (e.g., a processor or a group of processors) can be configured by software (e.g., an application or application portion) as a hardware module that operates to perform certain operations as described herein.

In some implementations, a hardware module can be implemented mechanically, electronically, or any suitable combination thereof. For example, a hardware module can include dedicated circuitry or logic that is permanently configured to perform certain operations. For example, a hardware module can be a special-purpose processor, such as a Field-Programmable Gate Array (FPGA) or an Application Specific Integrated Circuit (ASIC). A hardware module can also include programmable logic or circuitry that is temporarily configured by software to perform certain operations. For example, a hardware module can include software executed by a processor or other programmable processor. Once configured by such software, hardware modules become specific machines (or specific components of a machine) uniquely tailored to perform the configured functions and are no longer general-purpose processors. It will be appreciated that the decision to implement a hardware module mechanically, in dedicated and permanently configured circuitry, or in temporarily configured circuitry (e.g., configured by software) can be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering implementations in which hardware modules are temporarily configured (e.g., programmed), each of the hardware modules need not be configured or instantiated at any one instance in time. For example, where a hardware module comprises a processor configured by software to become a special-purpose processor, the processor can be configured as respectively different special-purpose processors (e.g., comprising different hardware modules) at different times. Software accordingly configures a particular processor or processors, for example, to constitute a particular hardware module at one instance of time and to constitute a different hardware module at a different instance of time.

Hardware modules can provide information to, and receive information from, other hardware modules. Accordingly, the described hardware modules can be regarded as being communicatively coupled. Where multiple hardware modules exist contemporaneously, communications can be achieved through signal transmission (e.g., over appropriate circuits and buses) between or among two or more of the hardware modules. In implementations in which multiple hardware modules are configured or instantiated at different times, communications between such hardware modules can be achieved, for example, through the storage and retrieval of information in memory structures to which the multiple hardware modules have access. For example, one hardware module can perform an operation and store the output of that operation in a memory device to which it is communicatively coupled. A further hardware module can then, at a later time, access the memory device to retrieve and process the stored output. Hardware modules can also initiate communications with input or output devices, and can operate on a resource (e.g., a collection of information).

The various operations of example methods described herein can be performed, at least partially, by one or more processors that are temporarily configured (e.g., by software) or permanently configured to perform the relevant operations. Whether temporarily or permanently configured, such processors can constitute processor-implemented modules that operate to perform one or more operations or functions described herein. As used herein, "processor-implemented module" refers to a hardware module implemented using one or more processors.

Similarly, the methods described herein can be at least partially processor-implemented, with a particular processor or processors being an example of hardware. For example, at least some of the operations of a method can be performed by one or more processors or processor-implemented modules. Moreover, the one or more processors can also operate to support performance of the relevant operations in a "cloud computing" environment or as a "software as a service" (SaaS). For example, at least some of the operations can be performed by a group of computers (as examples of machines including processors), with these operations being accessible via a network (e.g., the Internet) and via one or more appropriate interfaces (e.g., an API).

The performance of certain of the operations can be distributed among the processors, not only residing within a single machine, but deployed across a number of machines. In some example implementations, the processors or processor-implemented modules can be located in a single geographic location (e.g., within a home environment, an office environment, or a server farm). In other example implementations, the processors or processor-implemented modules can be distributed across a number of geographic locations.

The modules, methods, applications, and so forth described herein are implemented in some implementations in the context of a machine and an associated software architecture. The sections below describe representative software architecture(s) and machine (e.g., hardware) architecture(s) that are suitable for use with the disclosed implementations.

Software architectures are used in conjunction with hardware architectures to create devices and machines tailored to particular purposes. For example, a particular hardware architecture coupled with a particular software architecture will create a mobile device, such as a mobile phone, tablet device, or so forth. A slightly different hardware and software architecture can yield a smart device for use in the "internet of things," while yet another combination produces a server computer for use within a cloud computing architecture. Not all combinations of such software and hardware architectures are presented here, as those of skill in the art can readily understand how to implement the inventive subject matter in different contexts from the disclosure contained herein.

FIG. 4 is a block diagram illustrating components of a machine 400, according to some example implementations, able to read instructions from a machine-readable medium (e.g., a machine-readable storage medium) and perform any one or more of the methodologies discussed herein. Specifically, FIG. 4 shows a diagrammatic representation of the machine 400 in the example form of a computer system, within which instructions 416 (e.g., software, a program, an application, an applet, an app, or other executable code) for causing the machine 400 to perform any one or more of the methodologies discussed herein can be executed. The instructions 416 transform the general, non-programmed machine into a particular machine programmed to carry out the described and illustrated functions in the manner described. In alternative implementations, the machine 400 operates as a standalone device or can be coupled (e.g., networked) to other machines. In a networked deployment, the machine 400 can operate in the capacity of a server machine or a client machine in a server-client network environment, or as a peer machine in a peer-to-peer (or distributed) network environment. The machine 400 can comprise, but not be limited to, a server computer, a client computer, PC, a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 416, sequentially or otherwise, that specify actions to be taken by the machine 400. Further, while only a single machine 400 is illustrated, the term "machine" shall also be taken to include a collection of machines 400 that individually or jointly execute the instructions 416 to perform any one or more of the methodologies discussed herein.

The machine 400 can include processors 410, memory/storage 430, and I/O components 450, which can be configured to communicate with each other such as via a bus 402. In an example implementation, the processors 410 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a RadioFrequency Integrated Circuit (RFIC), another processor, or any suitable combination thereof) can include, for example, a processor 412 and a processor 414 that can execute the instructions 416. The term "processor" is intended to include multi-core processors that can comprise two or more independent processors (sometimes referred to as "cores") that can execute instructions contemporaneously. Although FIG. 4 shows multiple processors 410, the machine 400 can include a single processor with a single core, a single processor with multiple cores (e.g., a multi-core processor), multiple processors with a single core, multiple processors with multiples cores, or any combination thereof.

The memory/storage 430 can include a memory 432, such as a main memory, or other memory storage, and a storage unit 436, both accessible to the processors 410 such as via the bus 402. The storage unit 436 and memory 432 store the instructions 416 embodying any one or more of the methodologies or functions described herein. The instructions 416 can also reside, completely or partially, within the memory 432, within the storage unit 436, within at least one of the processors 410 (e.g., within the processor's cache memory), or any suitable combination thereof, during execution thereof by the machine 400. Accordingly, the memory 432, the storage unit 436, and the memory of the processors 410 are examples of machine-readable media.

As used herein, "machine-readable medium" means a device able to store instructions (e.g., instructions 416) and data temporarily or permanently and can include, but is not limited to, random-access memory (RAM), read-only memory (ROM), buffer memory, flash memory, optical media, magnetic media, cache memory, other types of storage (e.g., Erasable Programmable Read-Only Memory (EEPROM)), and/or any suitable combination thereof. The term "machine-readable medium" should be taken to include a single medium or multiple media (e.g., a centralized or distributed database, or associated caches and servers) able to store the instructions 416. The term "machine-readable medium" shall also be taken to include any medium, or combination of multiple media, that is capable of storing instructions (e.g., instructions 416) for execution by a machine (e.g., machine 400), such that the instructions, when executed by one or more processors of the machine (e.g., processors 410), cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" excludes signals per se.

The I/O components 450 can include a wide variety of components to receive input, provide output, produce output, transmit information, exchange information, capture measurements, and so on. The specific I/O components 450 that are included in a particular machine will depend on the type of machine. For example, portable machines such as mobile phones will likely include a touch input device or other such input mechanisms, while a headless server machine will likely not include such a touch input device. It will be appreciated that the I/O components 450 can include many other components that are not shown in FIG. 4. The I/O components 450 are grouped according to functionality merely for simplifying the following discussion and the grouping is in no way limiting. In various example implementations, the I/O components 450 can include output components 452 and input components 454. The output components 452 can include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 454 can include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example implementations, the I/O components 450 can include biometric components 456, motion components 458, environmental components 460, or position components 462, among a wide array of other components. For example, the biometric components 456 can include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 458 can include acceleration sensor components (e.g., accelerometer), gravitation sensor components, rotation sensor components (e.g., gyroscope), and so forth. The environmental components 460 can include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that can provide indications, measurements, or signals corresponding to a surrounding physical environment. The position components 462 can include location sensor components (e.g., a Global Position System (GPS) receiver component), altitude sensor components (e.g., altimeters or barometers that detect air pressure from which altitude can be derived), orientation sensor components (e.g., magnetometers), and the like.

Communication can be implemented using a wide variety of technologies. The I/O components 450 can include communication components 464 operable to couple the machine 400 to a network 480 or devices 470 via a coupling 482 and a coupling 472, respectively. For example, the communication components 464 can include a network interface component or other suitable device to interface with the network 480. In further examples, the communication components 464 can include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 470 can be another machine or any of a wide variety of peripheral devices (e.g., a peripheral device coupled via a USB).

Moreover, the communication components 464 can detect identifiers or include components operable to detect identifiers. For example, the communication components 464 can include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information can be derived via the communication components 464, such as location via Internet Protocol (IP) geolocation, location via Wi-Fi^{®} signal triangulation, location via detecting an NFC beacon signal that can indicate a particular location, and so forth.

In various example implementations, one or more portions of the network 480 can be an ad hoc network, an intranet, an extranet, a virtual private network (VPN), a local area network (LAN), a wireless LAN (WLAN), a WAN, a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, the network 480 or a portion of the network 480 can include a wireless or cellular network and the coupling 482 can be a Code Division Multiple Access (CDMA) connection, a Global System for Mobile communications (GSM) connection, or another type of cellular or wireless coupling. In this example, the coupling 482 can implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long range protocols, or other data transfer technology.

The instructions 416 can be transmitted or received over the network 480 using a transmission medium via a network interface device (e.g., a network interface component included in the communication components 464) and utilizing any one of a number of well-known transfer protocols (e.g., HTTP). Similarly, the instructions 416 can be transmitted or received using a transmission medium via the coupling 472 (e.g., a peer-to-peer coupling) to the devices 470. The term "transmission medium" shall be taken to include any intangible medium that is capable of storing, encoding, or carrying the instructions 416 for execution by the machine 400, and includes digital or analog communications signals or other intangible media to facilitate communication of such software.

Throughout this specification, plural instances can implement components, operations, or structures described as a single instance. Although individual operations of one or more methods are illustrated and described as separate operations, one or more of the individual operations can be performed concurrently, and nothing requires that the operations be performed in the order illustrated. Structures and functionality presented as separate components in example configurations can be implemented as a combined structure or component. Similarly, structures and functionality presented as a single component can be implemented as separate components. These and other variations, modifications, additions, and improvements fall within the scope of the subject matter herein.

## Claims

1. A system comprising:
a processing device; and
a memory coupled to the processing device and storing instructions that, when executed by the processing device, cause the system to perform operations comprising:
receiving (310) a first request;
identifying (320) one or more constraint parameters associated with the first request;
based on the one or more constraint parameters, computing (330) a dispatch window with respect to the first request;
receiving (350) a second request;
based on the second request, adjusting (370) a first operation of a connected appliance with respect to the received first request, by delaying preparation of the first request by the connected appliance, based on one or more constraint parameters associated with the received second request; and
based on the adjustment of the first operation of the connected appliance, adjusting (380) a dispatch of the first request and the second request within the dispatch window.

2. The system of claim 1, wherein identifying one or more constraint parameters comprises computing a second constraint parameter based on a first constraint parameter.

3. The system of claim 1, wherein the memory further stores instructions to cause the system to perform operations comprising initiating a second operation with respect to the second request based on the dispatch window computed with respect to the first request.

4. The system of claim 1, wherein receiving a second request comprises receiving one or more inputs originating from a sensor associated with the second request.

5. The system of claim 1, wherein adjusting a dispatch of the first request comprises adjusting a first operation with respect to the first request based on the second request.

6. The system of claim 1, wherein adjusting a dispatch of the first request comprises initiating, based on the second request, an adjustment of an operation of a connected appliance with respect to the first request.

7. The system of claim 1, wherein the memory further stores instructions to cause the system to perform operations comprising identifying one or more constraint parameters associated with the second request.

8. The system of claim 1, wherein adjusting a dispatch of the first request comprises adjusting a first operation with respect to the first request based on one or more constraint parameters associated with the second request.

9. The system of claim 1, wherein adjusting a dispatch of the first request comprises adjusting a dispatch of the first request based on receipt of the second request and one or more other requests.

10. The system of claim 1, wherein adjusting a dispatch of the first request comprises adjusting a dispatch of the first request based on receipt of the second request and an availability of one or more fulfillment resources.

11. The system of claim 1, wherein adjusting a dispatch of the first request comprises adjusting a dispatch of the first request based on receipt of the second request and a determined location of one or more fulfillment resources.

12. The system of claim 1, wherein adjusting a dispatch of the first request comprises adjusting a dispatch of the first request and the second request.

13. The system of claim 1, wherein adjusting a dispatch of the first request comprises adjusting the dispatch window based on the second request.

14. A computer-implemented method comprising one or more operations as performed by a system according to any one of claims 1-13.

15. A non-transitory computer readable medium having instructions stored thereon that, when executed by a processing device, cause the processing device to perform operations as performed by a system according to any one of claims 1-13.

## Patentansprüche

1. System, umfassend:
eine Verarbeitungsvorrichtung; und
einen Speicher, der mit der Verarbeitungsvorrichtung gekoppelt ist und Anweisungen speichert, die, wenn sie von der Verarbeitungsvorrichtung ausgeführt werden, das System veranlassen, Operationen durchzuführen, die umfassen:
Empfangen (310) einer ersten Anforderung;
Identifizieren (320) eines oder mehrerer Beschränkungsparameter, die der ersten Anforderung zugeordnet sind;
basierend auf dem einen oder den mehreren Beschränkungsparametern, Berechnen (330) eines Versandfensters in Bezug auf die erste Anforderung;
Empfangen (350) einer zweiten Anforderung;
basierend auf der zweiten Anforderung, Anpassen (370) einer ersten Operation eines vernetzten Geräts in Bezug auf die empfangene erste Anforderung, durch Verzögern der Vorbereitung der ersten Anforderung durch das vernetzte Gerät, basierend auf einem oder mehreren Beschränkungsparametern, die der empfangenen zweiten Anforderung zugeordnet sind; und
basierend auf der Anpassung der ersten Operation des vernetzten Geräts, Anpassen (380) eines Versands der ersten Anforderung und der zweiten Anforderung innerhalb des Versandfensters.

2. System nach Anspruch 1, wobei das Identifizieren eines oder mehrerer Beschränkungsparameter ein Berechnen eines zweiten Beschränkungsparameters basierend auf einem ersten Beschränkungsparameter umfasst.

3. System nach Anspruch 1, wobei der Speicher ferner Anweisungen speichert, um das System zu veranlassen, Operationen durchzuführen, die ein Einleiten einer zweiten Operation in Bezug auf die zweite Anforderung basierend auf dem in Bezug auf die erste Anforderung berechneten Versandfenster umfassen.

4. System nach Anspruch 1, wobei das Empfangen einer zweiten Anforderung ein Empfangen einer oder mehrerer Eingaben umfasst, die von einem Sensor stammen, der der zweiten Anforderung zugeordnet ist.

5. System nach Anspruch 1, wobei das Anpassen eines Versands der ersten Anforderung ein Anpassen einer ersten Operation in Bezug auf die erste Anforderung basierend auf der zweiten Anforderung umfasst.

6. System nach Anspruch 1, wobei das Anpassen eines Versands der ersten Anforderung ein Einleiten, basierend auf der zweiten Anforderung, einer Anpassung einer Operation eines vernetzten Geräts in Bezug auf die erste Anforderung umfasst.

7. System nach Anspruch 1, wobei der Speicher ferner Anweisungen speichert, um das System zu veranlassen, Operationen durchzuführen, die ein Identifizieren eines oder mehrerer Beschränkungsparameter umfassen, die der zweiten Anforderung zugeordnet sind.

8. System nach Anspruch 1, wobei das Anpassen eines Versands der ersten Anforderung ein Anpassen einer ersten Operation in Bezug auf die erste Anforderung basierend auf einem oder mehreren Beschränkungsparametern umfasst, die der zweiten Anforderung zugeordnet sind.

9. System nach Anspruch 1, wobei das Anpassen eines Versands der ersten Anforderung ein Anpassen eines Versands der ersten Anforderung basierend auf dem Empfang der zweiten Anforderung und einer oder mehrerer anderer Anforderungen umfasst.

10. System nach Anspruch 1, wobei das Anpassen eines Versands der ersten Anforderung ein Anpassen eines Versands der ersten Anforderung basierend auf dem Empfang der zweiten Anforderung und einer Verfügbarkeit einer oder mehrerer Erfüllungsressourcen umfasst.

11. System nach Anspruch 1, wobei das Anpassen eines Versands der ersten Anforderung ein Anpassen eines Versands der ersten Anforderung basierend auf dem Empfang der zweiten Anforderung und einem bestimmten Standort einer oder mehrerer Erfüllungsressourcen umfasst.

12. System nach Anspruch 1, wobei das Anpassen eines Versands der ersten Anforderung ein Anpassen eines Versands der ersten Anforderung und der zweiten Anforderung umfasst.

13. System nach Anspruch 1, wobei das Anpassen eines Versands der ersten Anforderung ein Anpassen des Versandfensters basierend auf der zweiten Anforderung umfasst.

14. Computerimplementiertes Verfahren, umfassend eine oder mehrere Operationen, wie sie durch ein System nach einem der Ansprüche 1 bis 13 durchgeführt werden.

15. Nicht-transitorisches computerlesbares Medium mit darauf gespeicherten Anweisungen, die, wenn sie von einer Verarbeitungsvorrichtung ausgeführt werden, die Verarbeitungsvorrichtung veranlassen, Operationen durchzuführen, wie sie durch ein System nach einem der Ansprüche 1 bis 13 durchgeführt werden.

## Revendications

1. Système comprenant :
un dispositif de traitement ; et
une mémoire couplée au dispositif de traitement et stockant des instructions qui, lorsqu'elles sont exécutées par le dispositif de traitement, amènent le système à effectuer des opérations comprenant :
la réception (310) d'une première requête ;
l'identification (320) d'un ou plusieurs paramètres de contrainte associés à la première requête ;
sur la base du ou des paramètres de contrainte, le calcul (330) d'une fenêtre d'expédition relativement à la première requête ;
la réception (350) d'une seconde requête ;
sur la base de la seconde requête, l'ajustement (370) d'une première opération d'un appareil connecté relativement à la première requête reçue, en retardant la préparation de la première requête par l'appareil connecté, sur la base d'un ou plusieurs paramètres de contrainte associés à la seconde requête reçue ; et
sur la base de l'ajustement de la première opération de l'appareil connecté, l'ajustement (380) d'une expédition de la première requête et de la seconde requête à l'intérieur de la fenêtre d'expédition.

2. Système selon la revendication 1, dans lequel l'identification d'un ou plusieurs paramètres de contrainte comprend le calcul d'un second paramètre de contrainte sur la base d'un premier paramètre de contrainte.

3. Système selon la revendication 1, dans lequel la mémoire stocke en outre des instructions pour amener le système à effectuer des opérations comprenant l'initiation d'une seconde opération relativement à la seconde requête sur la base de la fenêtre d'expédition calculée relativement à la première requête.

4. Système selon la revendication 1, dans lequel la réception d'une seconde requête comprend la réception d'une ou plusieurs entrées provenant d'un capteur associé à la seconde requête.

5. Système selon la revendication 1, dans lequel l'ajustement d'une expédition de la première requête comprend l'ajustement d'une première opération relativement à la première requête sur la base de la seconde requête.

6. Système selon la revendication 1, dans lequel l'ajustement d'une expédition de la première requête comprend l'initiation, sur la base de la seconde requête, d'un ajustement d'une opération d'un appareil connecté relativement à la première requête.

7. Système selon la revendication 1, dans lequel la mémoire stocke en outre des instructions pour amener le système à effectuer des opérations comprenant l'identification d'un ou plusieurs paramètres de contrainte associés à la seconde requête.

8. Système selon la revendication 1, dans lequel l'ajustement d'une expédition de la première requête comprend l'ajustement d'une première opération relativement à la première requête sur la base d'un ou plusieurs paramètres de contrainte associés à la seconde requête.

9. Système selon la revendication 1, dans lequel l'ajustement d'une expédition de la première requête comprend l'ajustement d'une expédition de la première requête sur la base de la réception de la seconde requête et d'une ou plusieurs autres requêtes.

10. Système selon la revendication 1, dans lequel l'ajustement d'une expédition de la première requête comprend l'ajustement d'une expédition de la première requête sur la base de la réception de la seconde requête et d'une disponibilité d'une ou plusieurs ressources d'exécution.

11. Système selon la revendication 1, dans lequel l'ajustement d'une expédition de la première requête comprend l'ajustement d'une expédition de la première requête sur la base de la réception de la seconde requête et d'un emplacement déterminé d'une ou plusieurs ressources d'exécution.

12. Système selon la revendication 1, dans lequel l'ajustement d'une expédition de la première requête comprend l'ajustement de l'expédition de la première requête et de la seconde requête.

13. Système selon la revendication 1, dans lequel l'ajustement d'une expédition de la première requête comprend l'ajustement de la fenêtre d'expédition sur la base de la seconde requête.

14. Procédé mis en œuvre par ordinateur comprenant une ou plusieurs opérations telles qu'effectuées par un système selon l'une quelconque des revendications 1 à 13.

15. Support lisible par ordinateur non transitoire comportant des instructions stockées sur celui-ci qui, lorsqu'elles sont exécutées par un dispositif de traitement, amènent le dispositif de traitement à effectuer des opérations telles qu'effectuées par un système selon l'une quelconque des revendications 1 à 13.
